# EUROPÄISCHE PATENTSCHRIFT

(11) **EP 1 351 836 B1**
(45) Veröffentlichungstag und Bekanntmachung des Hinweises auf die Patenterteilung: **22.04.2009**
(21) Anmeldenummer: 02708279.1
(22) Anmeldetag: 14.01.2002
(51) Int. Cl.: B60W 30/20, F16H 3/10, F16H 61/04, B60W 10/02, B60W 10/04

(54) **VERFAHREN ZUR STEUERUNG UND REGELUNG EINES ANTRIEBSSTRANGES**
METHOD FOR CONTROLLING AND REGULATING A DRIVE TRAIN
PROCEDE POUR COMMANDER ET REGULER UNE TRANSMISSION

(30) Priorität: 17.01.2001 DE 10101861
(43) Veröffentlichungstag der Anmeldung: 15.10.2003
(73) Patentinhaber: ZF Friedrichshafen AG, 88038 Friedrichshafen (DE)
(72) Erfinder: DREIBHOLZ, Ralf, 88074 Meckenbeuren (DE); BAASCH, Detlef, 88048 Friedrichshafen (DE); GUMPOLTSBERGER, Gerhard, 88045 Friedrichshafen (DE)
(86) Internationale Anmeldenummer: PCT/EP2002/000255
(87) Internationale Veröffentlichungsnummer: WO 2002/057109

(56) Entgegenhaltungen:
- DE-A- 19 504 847
- DE-A- 19 735 759
- US-A- 4 616 521
- US-A- 4 622 866
- US-A- 4 860 607

## Beschreibung

Die Erfindung betrifft ein Verfahren zur Steuerung und Regelung eines Antriebsstranges eines Fahrzeugs mit einem Antriebsaggregat, mit einem Getriebe und mit einem Abtrieb.

In der DE 197 35 759 A1 ist ein Verfahren zum Steuern einer automatischen Antriebsvorrichtung beschrieben, welche eine Antriebsquelle, ein Geschwindigkeitswechselgetriebe mit mehreren kuppelbaren Zahnradsätzen, eine fluidbetätigbare Hauptkupplung und fluidbetätigbare Schaltmittel zum Aktivieren der einzelnen Zahnradsätze aufweist. Darüber hinaus ist für die Ansteuerung der Hauptkupplung und der Schaltmittel eine elektronische Steuerung vorgesehen, wobei zur Erzielung einer zugkraftunterbrechungsfreien Umschaltung der Schaltmittel die Hauptkupplung im Rutschzustand gehalten wird. Zum Schalten der Vorwärtsgänge sind an einer Getriebeeingangswelle und an einer Getriebeausgangswelle jeweils eine Ziehkeileinrichtung als Kupplungselement bzw. Schaltmittel vorgesehen, die über je ein hydraulisches Stellelement zum Umschalten der Übersetzungsstufen bzw. Vorwärtsgänge betätigt werden. Dabei können jeweils zwei lose Zahnräder auf der Getriebeeingangswelle bzw. Getriebeabtriebswelle mit jeweils zwei Festzahnrädern auf der Getriebeeingangswelle bzw. der Getriebeabtriebswelle gekuppelt werden.

Die Getriebeeingangswelle weist eine Zentralbohrung auf, in der ein Stößel verschiebbar geführt ist, der einen Ziehkeil als formschlüssiges Kupplungselement trägt. Der Ziehkeil durchragt dabei einen Radialschlitz in der Eingangswelle und wirkt mit Längsnuten in den Zahnrädern zusammen. Die Länge des Radialschlitzes erlaubt ein axiales Verschieben des Ziehkeiles über den Stößel von einer ersten Position, in welcher der Ziehkeil ein erstes Zahnrad formschlüssig mit der Getriebeeingangswelle kuppelt, in eine mittlere Leerlaufposition, in der der Ziehkeil keine formschlüssige Verbindung zwischen der Getriebeeingangswelle und einem Zahnrad herstellt, und in eine dritte Position, in der ein weiteres Zahnrad einer neuen Übersetzungsstufe formschlüssig mit der Getriebeeingangswelle gekuppelt ist.

Zur Erzielung eines,verschleißarmen Durchschaltens des Ziehkeiles von dem einen Zahnrad zu dem anderen Zahnrad wird im Umschaltmoment für ein kurzes Zeitintervall unabhängig von einer Gaspedalvorgabe eine Drosselklappe der Brennkraftmaschine im Öffnungsquerschnitt vermindert, um im Millisekunden- bis Zehntelsekundenbereich das Antriebsmoment der Brennkraftmaschine zu verringern.

Dieses bekannte Verfahren zum Steuern einer automatischen Antriebsvorrichtung weist jedoch den Nachteil auf, daß der Ziehkeil bzw. das Schaltelement bei einer Zughochschaltung unter Last aus dem Eingriff mit dem Zahnrad gezogen werden muß, wodurch hohe Schaltkräfte erforderlich sind. Zur Reduzierung dieser Schaltkräfte wird vorgeschlagen, das Antriebsmoment der Brennkraftmaschine im Umschaltmoment zu reduzieren. Jedoch wird durch diese Vorgehensweise der Antriebsstrang eines Kraftfahrzeuges über einen langen Zeitraum komplett entlastet, was zu einem unerwünschten Zugkrafteinbruch führt.

Dokument US-A-4 622 866 offenbart die Merkmale des Oberbegriffs des Anspruchs 1.

Aufgabe der vorliegenden Erfindung ist es daher, ein Verfahren zur Steuerung und Regelung eines Antriebsstranges zur Verfügung zu stellen, mittels welchem eine Zughochschaltung schnell und ohne Zugkraftunterbrechung bei hohem Schaltkomfort durchführbar ist.

Erfindungsgemäß wird diese Aufgabe mit einem Verfahren zur Steuerung und Regelung eines Antriebsstranges eines Fahrzeugs gemäß den Merkmalen des Patentanspruches 1 gelöst.

Das erfindungsgemäße Verfahren zur Steuerung und Regelung eines Antriebsstranges eines Fahrzeuges, bei welchem ein alter Gang oder ein neuer Gang über mit Zahnradpaarungen des Getriebes korrespondierende steuerbare Freilaufeinrichtungen ab- oder zugeschaltet wird, ermöglicht vorteilhafterweise, daß auf eine Entlastung des Antriebsstranges verzichtet werden kann, womit eine Zugkraftunterbrechung während einer Zughochschaltung vermieden wird.

Dieser Vorteil resultiert daraus, daß der neue Gang bzw. die Wirkverbindung zwischen einer steuerbaren Freilaufeinrichtung und einer Zahnradpaarung des neuen Ganges schlagartig zugeschaltet wird, wobei ein alter aktuell eingelegter Gang bzw. die Wirkverbindung zwischen einer dem alten Gang zugeordneten steuerbaren Freilaufeinrichtung und einer die Übersetzungsstufe des alten Ganges ausbildenden Zahnradpaarung wenigstens annähernd gleichzeitig gelöst wird. Aufgrund dieser Vorgehensweise wird ein Kraftfluß in dem Antriebsstrang in vorteilhafterweise während der eigentlichen Schaltung nicht unterbrochen, und eine Zugkraftunterbrechung wird auf einfache Art und Weise vermieden.

Weiter ist von Vorteil, daß während des Schaltvorganges auftretende Schwingungen im Antriebsstrang und Moment-überhöhungen von der abtriebsseitig angeordneten Kupplung auf den Abtrieb nicht übertragen werden, da eine Übertragungsfähigkeit der Kupplung bei Vorliegen eines Schaltbefehls zur Durchführung einer Zughochschaltung derart eingestellt wird, daß ein an dieser anliegendes aktuelles Antriebsmoment des Antriebsaggregates auf den Abtrieb übertragen wird, und daß die Kupplung dabei wenigstens annähernd einen schlupffreien Zustand aufweist.

Diese Einstellung der Übertragungsfähigkeit der Kupplung führt dazu, daß ein durch die schlagartige Zuschaltung des neuen Ganges bewirktes Beschleunigungsmoment zu einem Aufreißen der abtriebsseitig angeordneten Kupplung und zu einer Erhöhung der Kupplungseingangsdrehzahl führt, wobei am Abtrieb der Momentsprung durch die nunmehr rutschende Kupplung begrenzt wird. Mit dieser Vorgehensweise wird eine deutliche Verbesserung im Momentverhalten am Abtrieb bei der schlagartigen Ankopplung der Drehmassen des Getriebes während des Einschaltens bzw. Zuschaltens der Wirkverbindung des neuen Ganges zwischen einer steuerbaren Freilaufeinrichtung und einer damit korrespondierenden Zahnradpaarung des neuen Ganges erreicht.

Diese beschriebenen Vorteile des erfindungsgemäßen Verfahrens ergeben insgesamt einen wesentlich höheren Schaltkomfort bei einer Reduzierung der Belastung der im Antriebsstrang abtriebsseitig der Kupplung angeordneten Bauteile.

Weitere Vorteile und Weiterbildungen der Erfindung ergeben sich aus den Patentansprüchen und aus dem nachfolgend anhand der Zeichnung prinzipmäßig beschriebenen Ausführungsbeispiel.

Es zeigt:
- Fig. 1: einen schematisierten Verlauf eines Ab- triebsmomentes'während eines Schaltablaufes ohne Motoreingriff;
- Fig. 2: einen schematisierten Verlauf eines Ab- triebsmomentes während eines Schaltvorganges und damit korrespondierende Verläufe einer Kupplungsbetätigung sowie eines Motorein- griffs und
- Fig. 3: eine schematisierte Darstellung eines An- triebsstranges mit einem Räderschema eines in dem Antriebsstrang angeordneten Getrie- bes, wobei ein leistungstrennendes Schalt- element auf einer Abtriebsseite eines Ge- triebes angeordnet ist.

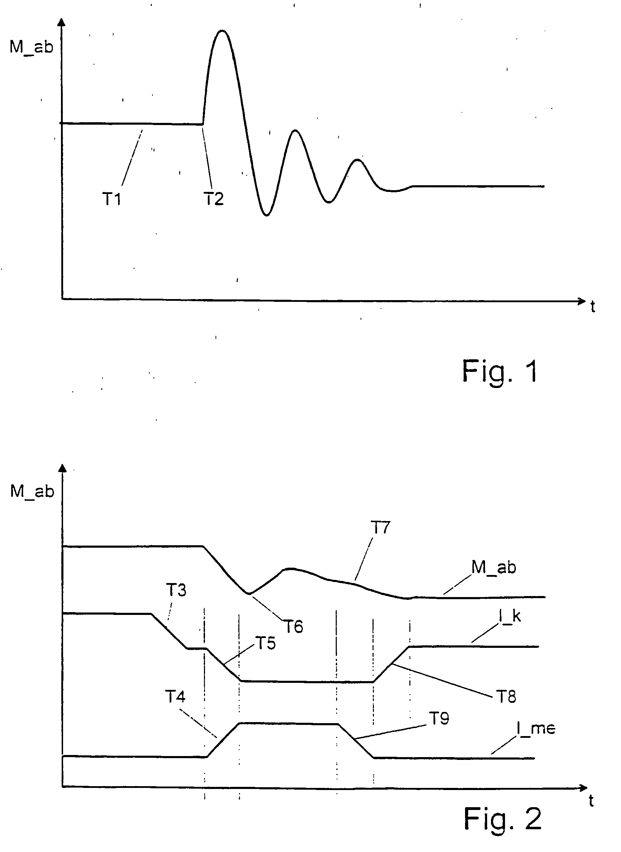

Anhand der in den Fig. 1 und Fig. 2 dargestellten Verläufe eines Abtriebsmomentes M_ab während eines Schaltablaufes einer Zughochschaltung soll die Wirkungsweise des erfindungsgemäßen Verfahrens zur Steuerung und Regelung eines Antriebsstranges eines Fahrzeuges und die besondere Wirkung einer getriebeabtriebsseitigen Anordnung der Kupplung aufgezeigt werden, wobei Fig. 2 im Unterschied zu Fig. 1 den Verlauf bei Anwendung des erfindungsgemäßen Verfahrens wiedergibt.

In Fig. 1 ist der Verlauf eines Momentes M_ab an einem Abtrieb eines Abtriebsstranges eines Fahrzeuges bzw. eines Kraftfahrzeuges während eines Schaltvorganges von einem alten Gang zu einem neuen Gang während einer Zughochschaltung dargestellt, wie er sich ohne Anwendung des erfindungsgemäßen Verfahrens gestalten würde. Der gezeigte Verlauf des Abtriebsmomentes M_ab wird dabei ohne eine Reduktion eines Antriebsmomentes eines Antriebsaggregates des Antriebsstranges durchgeführt, wobei eine Kupplung des Antriebsstranges getriebeantriebsseitig angeordnet ist.

Das Abtriebsmoment M_ab bzw. dessen Verlauf ist über der Zeit t aufgetragen und weist in einem ersten Bereich T1, in welchem in einem Getriebe des Antriebsstranges eine aktuelle Übersetzung eines alten Ganges eingestellt ist, einen wenigstens annähernd konstanten Wert auf. An einem Punkt T2, an welchem das Abtriebsmoment M_ab steil ansteigt, wird eine Übersetzung eines neuen Ganges schlagartig eingestellt, was zu einer Beschleunigung des Abtriebs und zu einem Anstieg des Abtriebsmomentes M_ab führt. Mit zunehmender Zeit t wird die durch die Zuschaltung des neuen Ganges generierte Schwingung in dem Antriebsstrang gedämpft, bis sich ein der Übersetzung des neuen Ganges äquivalenter Wert des Abtriebsmomentes M_ab des neuen Ganges einstellt.

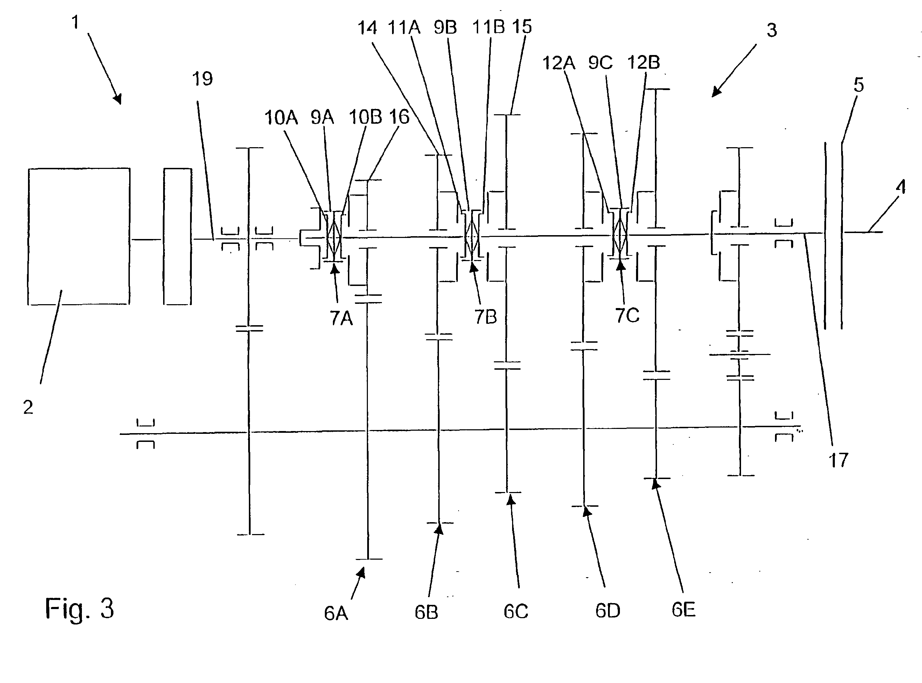

Der in Fig. 2 gezeigte Verlauf des Abtriebsmomentes M_ab während eines Schaltvorganges stellt sich bei Anwendung des Verfahrens nach der Erfindung bei einem in Fig. 3 schematisch dargestellten Antriebsstrang 1 ein, dessen Getriebe 3 mit Zahnradpaarungen 6A bis 6E korrespondierende steuerbare Freilaufeinrichtungen 7A bis 7C zum Ab- oder Zuschalten eines alten oder eines neuen Ganges und eine abtriebsseitig angeordnete Kupplung 5 aufweist. Die Freilaufeinrichtungen 7A bis 7C sind jeweils mit einer Schaltmuffe 9A, 9B, 9C und jeweils zwischen zwei Losrädern 14, 15, 16 der Zahnradpaarungen 6A bis 6E und den Schaltmuffen 9A, 9B, 9C angeordneten Kupplungsscheiben 10A, 10B, 11A, 11B, 12A, 12B ausgebildet.

In Abhängigkeit einer axialen Position der in axialer Richtung des Getriebes 3 verschieblich geführten Schaltmuffen 9A, 9B, 9C besteht die Möglichkeit, über die Freilaufeinrichtungen 7A bis 7C im Antriebsstrang 1 Zugmomente und/oder Zug- und Schubmomente von dem Antriebsaggregat 2 über das Getriebe 3 bzw. über eine Getriebeeingangswelle 19 und eine Getriebeausgangswelle 17 zu dem Abtrieb 4 zu führen.

Betrachtet man die Verläufe in Fig. 2, so ist ersichtlich, daß bei Vorliegen eines Schaltsignals zur Durchführung einer Zughochschaltung zunächst eine Übertragungsfähigkeit der Kupplung 5, welche mit einer Linie l_k wiedergegeben ist, in einer ersten Phase T3 des Verlaufs l_k der Kupplungsbetätigung derart eingestellt wird, daß ein an dieser anliegendes aktuelles Antriebsmoment des Antriebsaggregates 2 auf den Abtrieb bei einem geringen Schlupf bzw. einem schlupffreien Zustand der Kupplung 5 gerade übertragen wird.

Daran anschließend wird in einer Schaltvorbereitungsphase das Antriebsmoment bzw. Motormoment des Antriebsaggregates 2 in einer ersten Phase T4 eines Motoreingriffs, dessen Verlauf anhand einer Linie l_me dargestellt ist, rampenförmig bis auf Null oder ein maximales Schubmoment reduziert. Während dieses Zeitintervalls, innerhalb dessen das Antriebsmoment abgesenkt wird, sinkt das im Antriebsstrang 1 vorliegende Moment aufgrund der Elastizitäten und Drehmasseneffekte des Antriebsstranges 1 nur verzögert ab. Die Übertragungsfähigkeit der Kupplung 5 wird in der gleichen Zeit gemäß einem zweiten Bereich T5 des Verlaufs der Kupplungsbetätigung auf einen Wert reduziert, der dem notwendigen Haltemoment des neuen Ganges nach der Schaltung entspricht, wobei das neue von der Kupplung 5 zu übertragende Moment gleich dem alten Moment multipliziert mit einem Verhältnis der Übersetzung des neuen Ganges und einer Übersetzung des alten Ganges entspricht.

Vor der Zuschaltung des neuen Ganges wird eine Wirkverbindung zwischen einer betreffenden Freilaufeinrichtung der Freilaufeinrichtungen 7A bis 7C und einer damit korrespondierenden Zahnradpaarung eines alten Ganges derart angesteuert, daß über diese anliegende Zugmomente übertragen werden und bei Anliegen eines Schubmomentes die Wirkverbindung des alten Ganges gelöst wird.

Vor Erreichen eines Minimums T6 des Verlaufs des Abtriebsmomentes M_ab gemäß Fig. 2 erfolgt die schlagartige Zuschaltung des neuen Ganges. Dabei wird die Wirkverbindung zwischen der Freilaufeinrichtung und der damit korrespondieren Zahnradpaarung des neuen Ganges hergestellt. Durch die Zuschaltung des neuen Ganges wird die Kupplungseingangsdrehzahl erhöht und das Abtriebsmoment M_ab steigt wieder an, wobei durch das an der Kupplung 5 anliegende Beschleunigungsmoment die Kupplung 5 in einen Schlupfzustand übergeführt wird und das kupplungseingangsseitig anliegende Moment nur zum Teil über die Kupplung 5 auf den Abtrieb 4 geleitet wird. Aufgrund des Schlupfzustandes der Kupplung 5 werden während des Schaltvorgangs erzeugte Schwingungen im Antriebsstrang 1 nicht auf den Abtrieb 4 übertragen, da die Kupplung 5 diese stark dämpft bzw. überhaupt nicht durchleitet, was einen enormen Vorteil gegenüber einer getriebeeingangsseitig angeordneten Kupplung darstellt.

Nach dem Ansteigen des Abtriebsmomentes M_ab läuft das Abtriebsmoment M_ab entsprechend einem zweiten Bereich T7 des Verlaufs des Abtriebsmomentes M_ab einem der Übersetzung des neuen Ganges äquivalenten Wert des Abtriebsmomentes M_ab entgegen. Eine Drehzahl des Antriebsaggregates 2, welches vorzugsweise als Ottomotor oder Dieselmotor ausgebildet ist, verringert sich dabei aufgrund des Abbremseffektes des Motoreingriffs und des in der Kupplung 5 wirkenden Rutschmomentes.

Konstruktiv sind die Freilaufeinrichtungen 7A bis 7C des Getriebes 3 hierzu derartig ausgestaltet, daß sie in Abhängigkeit ihrer Ansteuerung anliegende Zug- und Schubmomente übertragen können, wobei die einem alten Gang zugeordneten Freilaufeinrichtungen bei einer Schaltung, insbesondere einer Zughochschaltung, derart angesteuert werden, daß sie lediglich anliegende Zugmomente übertragen, und daß bei einer Momentumkehr von einem Zugmoment zu einem Schubmoment die Wirkverbindung zwischen einer Freilaufeinrichtung und einer korrespondierenden Zahnradpaarung schnell und spontan gelöst wird. Eine derartige Momentumkehr erfolgt bei einer Zughochschaltung durch die Zuschaltung des neuen Ganges, wobei mit einer schlagartigen Zuschaltung des neuen Ganges die Wirkverbindung des alten Ganges gleichzeitig bzw. sofort nach der Zuschaltung des neuen Ganges gelöst wird.

Zweckmäßigerweise kann es vorgesehen sein, daß eine mit der Freilaufeinrichtung korrespondierende Zahnradpaarung bzw. ein an der Zahnradpaarung angeordnetes Bauteil, über welche die Wirkverbindung eines Ganges hergestellt wird, eine Abweiseinrichtung bzw. Abweisflanke aufweist, welche bei einem anliegenden Schubmoment die Freilaufeinrichtung schlagartig aus dem Eingriff mit der Zahnradpaarung führt.

Mit dieser Ausgestaltung der Freilaufeinrichtungen 7A bis 7C und der damit korrespondierenden Zahnradpaarungen 6A bis 6E bzw. der zwischen,diesen Bauteilen herstellbaren Wirkverbindungen ist ein spontaner bzw. schlagartiger Wechsel von einer Übersetzung eines alten Ganges zu einer Übersetzung eines neuen Ganges äußerst schnell bei voller Last im Antriebsstrang 1 durchführbar.

Nach der Zuschaltung des neuen Ganges wird die Übertragungsfähigkeit der Kupplung 5 gemäß einem in Fig. 2 gezeigten Bereich T8 des Verlaufs l_k der Kupplungsbetätigung erhöht, so daß eine Differenzdrehzahl in der Kupplung 5 in Richtung einer Synchrondrehzahl geführt wird. Ab einem Schwellwert der Differenzdrehzahl der Kupplung 5 wird das Antriebsmoment des Antriebsaggregates 2 gemäß einem gezeigten zweiten Abschnitt T9 des Verlaufs l_me des Motoreingriffs wieder auf den Wert vor der Schaltung rampenförmig angehoben.

Hat die Kupplung 5 nach einer gewissen schlupfenden Phase ihre Synchrondrehzahl erreicht, wird deren Übertragungsfähigkeit auf einen maximalen Wert eingestellt.

Alternativ hierzu kann es vorgesehen sein, daß bei Vorliegen der Synchrondrehzahl in der Kupplung 5 die Übertragungsfähigkeit der Kupplung über eine Schlupfregelung eingestellt wird, um Schwingungen und Resonanzen im Antriebsstrang 1 über die schlupfende Kupplung 5 auszufiltern und den Fahrkomfort zu erhöhen.

Die Übertragungsfähigkeit der Kupplung 5 kann über mechanische oder auch hydraulische Einrichtungen eingestellt werden, wobei deren Ansteuerung vorliegend über eine mit dem Antriebsstrang 1 signaltechnisch in Verbindung stehende, nicht näher dargestellte elektronische Steuereinheit erfolgt.

### Bezugszeichen

- 1: Antriebsstrang
- 2: Antriebsaggregat
- 3.: Getriebe
- 4: Antrieb
- 5: Kupplung
- 6A bis 6E: Zahnradpaarungen
- 7A bis 7C: Freilaufeinrichtungen
- 9A bis 9C: Schaltmuffen
- 10A, 10B: Kupplungsscheiben
- 11A, 11B: Kupplungsscheiben
- 12A, 12B: Kupplungsscheiben
- 14, 15, 16: Losrad
- 17: Getriebeausgangswelle
- 19: Getriebeeingangswelle

- l_k: Verlauf der Kupplungsbetätigung
- l_me: Verlauf des Motoreingriffs
- M_ab: Abtriebsmoment
- t: Zeit
- T1: erster Bereich des Verlaufs des Abtriebsmomen- tes
- T2: Punkt des Verlaufs des Abtriebsmomentes
- T3: Erster Bereich des Verlaufs der Kupplungsbetä- tigung
- T4: Erster Abschnitt des Verlaufs des Motorein- griffs
- T5: Zweiter Bereich des Verlaufs der Kupplungsbetä- tigung
- T6: Minimum des Verlaufs des Abtriebsmomentes
- T7: Zweiter Bereich des Verlaufs des Abtriebsmomen- tes
- T8: Dritter Bereich des Verlaufs der Kupplungsbetä- tigung
- T9: Zweiter Abschnitt des Verlaufs des Motorein- griffs

## Patentansprüche

1. Verfahren zur Steuerung und Regelung eines Antriebsstranges (1) eines Fahrzeugs mit einem Antriebsaggregat (2), mit einem Getriebe (3) und mit einem Abtrieb (4), wobei das Getriebe (3) mit Zahnradpaarungen (6A bis 6E) korrespondierende steuerbare Freilaufeinrichtungen (7A bis 7C) zum Ab- oder Zuschalten eines alten oder eines neuen Ganges und eine abtriebsseitig angeordnete Kupplung (5) aufweist, **dadurch gekennzeichnet, dass** bei Vorliegen eines Schaltbefehles zur Durchführung einer Zughochschaltung eine Übertragungsfähigkeit der Kupplung (5) derart eingestellt wird, daß ein an dieser anliegendes aktuelles Antriebsmoment des Antriebsaggregates (2) auf den Abtrieb (4) übertragen wird und die Kupplung (5) dabei wenigstens annähernd einen schlupffreien Zustand aufweist, und wobei bei einer Zughochschaltung eine Wirkverbindung zwischen einer steuerbaren Freilaufeinrichtung und einer damit korrespondierenden Zahnradpaarung des neuen Ganges schlagartig hergestellt wird und die Wirkverbindung des alten Ganges wenigstens annähernd gleichzeitig gelöst wird.

2. Verfahren nach Anspruch 1, **dadurch gekennzeichnet, daß** bei Vorliegen eines Schaltbefehls ein Antriebsmoment des Antriebsaggregates (2) vor dem Zuschalten des neuen Ganges derart reduziert wird, daß sich am Abtrieb (4) ein einem neuen einzulegenden Gang entsprechendes Abtriebsmoment (M_ab) einstellt.

3. Verfahren nach Anspruch 1 oder 2, **dadurch gekennzeichnet, daß** eine Wirkverbindung zwischen einer Freilaufeinrichtung und einer damit korrespondierenden Zahnradpaarung eines alten Ganges derart angesteuert wird, daß über diese anliegende Zugmomente übertragen werden, wobei die Wirkverbindung des alten Ganges bei Anliegen eines Schubmomentes gelöst wird.

4. Verfahren nach einem der Ansprüche 1 bis 3, **dadurch gekennzeichnet, daß** die Übertragungsfähigkeit der Kupplung (5) während des gesamten Schaltvorgangs derart geregelt wird, daß diese beim Zuschalten des neuen Ganges in einen Schlupfzustand übergeht.

5. Verfahren nach einem der Ansprüche 1 bis 4, **dadurch gekennzeichnet, daß** nach der Schaltung die Übertragungsfähigkeit der Kupplung (5) erhöht wird, so daß eine Differenzdrehzahl in der Kupplung (5) in Richtung einer Synchrondrehzahl geführt wird.

6. Verfahren nach Anspruch 5, **dadurch gekennzeichnet, daß** ab einem Schwellwert der Differenzdrehzahl der Kupplung (5) das Antriebsmoment des Antriebs-aggregates (2) angehoben wird.

7. Verfahren nach Anspruch 5, **dadurch gekennzeichnet, daß** bei Vorliegen der Synchrondrehzahl in der Kupplung (5) die Übertragungsfähigkeit der Kupplung (5) auf einen maximalen Wert eingestellt wird.

8. Verfahren nach Anspruch 5, **dadurch gekennzeichnet, daß** bei Vorliegen der Synchrondrehzahl in der Kupplung (5) die Übertragungsfähigkeit der Kupplung (5) über eine Schlupfregelung eingestellt wird.

## Claims

1. Method for controlling and regulating a drive train (1) of a vehicle having a drive unit (2), having a gearbox (3) and having a drive (4), wherein the gearbox (3) has controllable free-wheeling devices (7A to 7C) which correspond to gearwheel pairings (6A to 6E) and have the purpose of disengaging or engaging an old or a new gear speed and a clutch (5) which is arranged on the output side, **characterized in that,** when a shifting instruction to carry out a traction upshift occurs, a transmission capability of the clutch (5) is set in such a way that a current driving torque, present at the latter, of the drive unit (2) is transmitted to the output (4) and the clutch (5) is at least approximately in a slip-free state in this context, and wherein when a traction upshift takes place an operative connection is suddenly produced between a controllable free-wheeling device and a gearwheel pairing, corresponding thereto, of the new gear speed, and the operative connection of the old gear speed is released at least approximately simultaneously.

2. Method according to Claim 1, **characterized in that,** when a shifting instruction occurs, a driving torque of the drive unit (2) is reduced before the engagement of the new gear speed in such a way that a driving torque (M_ab) which corresponds to a new gear speed to be engaged is set at the output (4).

3. Method according to Claim 1 or 2, **characterized in that** an operative connection between a free-wheeling device and a gearwheel pairing, corresponding thereto, of an old gear speed is actuated in such a way that traction torques which are present are transmitted via the latter, wherein the operative connection of the old gear speed is released when an overrun torque is present.

4. Method according to one of Claims 1 to 3, **characterized in that** the closed loop control of the transmission capability of the clutch (5) is carried out during the entire shifting process in such a way that said clutch (5) goes into a slip state when the new gear speed is engaged.

5. Method according to one of Claims 1 to 4, **characterized in that,** after the shifting operation, the transmission capability of the clutch (5) is increased, with the result that a differential rotational speed in the clutch (5) is adjusted in the direction of a synchronous rotational speed.

6. Method according to Claim 5, **characterized in that** the drive torque of the drive unit (2) is raised starting from a threshold value of the differential rotational speed of the clutch (5).

7. Method according to Claim 5, **characterized in that,** when the synchronous rotational speed is present in the clutch (5), the transmission capability of the clutch (5) is set to a maximum value.

8. Method according to Claim 5, **characterized in that,** when the synchronous rotational speed is present in the clutch (5), the transmission capability of the clutch (5) is set by means of a slip regulating process.

## Revendications

1. Procédé pour commander et réguler une transmission (1) d'un véhicule comportant un groupe d'entraînement (2), avec une boîte de vitesses (3) et avec un arbre de sortie (4), dans lequel la boîte de vitesses (3) comprend des dispositifs à roue libre (7A à 7C) commandables correspondant à des paires de roues dentées (6A à 6E) pour débrayer ou embrayer un ancien ou un nouveau rapport, ainsi qu'un accouplement (5) disposé côté sortie, **caractérisé en ce que**, en présence d'un ordre de changement de vitesse pour le passage à une vitesse supérieure, on règle une capacité de transmission de l'accouplement (5) de telle manière qu'un couple moteur actuel du groupe d'entraînement (2) présent à cet accouplement soit transmis à l'arbre de sortie (4) et que l'accouplement (5) présente en l'occurrence au moins approximativement un état libre de glissement, et dans lequel, lors d'un passage à une vitesse supérieure, une liaison active entre un dispositif à roue libre commandable et une paire de roues dentées correspondante du nouveau rapport est établie brusquement et la liaison active de l'ancien rapport est interrompue au moins approximativement en même temps.

2. Procédé selon la revendication 1, **caractérisé en ce que,** en présence d'un ordre de changement de vitesse, un couple d'entraînement du groupe d'entraînement (2) est réduit avant l'embrayage du nouveau rapport, de telle manière qu'il s'établisse à l'arbre de sortie (4) un couple de sortie (M_ab) correspondant à un nouveau rapport à engager.

3. Procédé selon la revendication 1 ou 2, **caractérisé en ce que** l'on commande une liaison active entre un dispositif à roue libre et une paire de roues dentées correspondante d'un ancien rapport, de telle manière que des couples de traction soient transmis par celui-ci, la liaison active de l'ancien rapport étant interrompue lors de l'application d'un couple de poussée.

4. Procédé selon l'une quelconque des revendications 1 à 3, **caractérisé en ce que** la capacité de transmission de l'accouplement (5) est régulée pendant toute l'opération de changement de vitesse, de telle manière qu'elle passe à un état de glissement lors de l'engagement du nouveau rapport.

5. Procédé selon l'une quelconque des revendications 1 à 4, **caractérisé en ce que,** après le changement de vitesse, on augmente la capacité de transmission de l'accouplement (5), de façon à introduire une vitesse de rotation différentielle dans l'accouplement (5) dans le sens d'une vitesse de rotation synchronisée.

6. Procédé selon la revendication 5, **caractérisé en ce que** le couple d'entraînement du groupe d'entraînement (2) est augmenté à partir d'une valeur de seuil de la vitesse de rotation différentielle de l'accouplement (5).

7. Procédé selon la revendication 5, **caractérisé en ce que,** en présence de la vitesse de rotation synchronisée dans l'accouplement (5), la capacité de transmission de l'accouplement (5) est réglée à une valeur maximale.

8. Procédé selon la revendication 5, **caractérisé en ce que,** en présence de la vitesse de rotation synchronisée dans l'accouplement (5), la capacité de transmission de l'accouplement (5) est réglée par une régulation du glissement.
